Europäisches Patentamt

(19) European Patent Office

Office européen des brevets

(11) Numéro de publication: **0 281 458**
**A2**

(12) # DEMANDE DE BREVET EUROPEEN

(21) Numéro de dépôt: **88400343.5**

(22) Date de dépôt: **16.02.88**

(51) Int. Cl.⁴: **A 23 K 1/14**
**A 23 K 1/18, A 23 K 1/00,**
**A 23 B 9/00, A 23 L 1/105**

(30) Priorité: **19.02.87 FR 8702148**

(43) Date de publication de la demande:
**07.09.88 Bulletin 88/36**

(84) Etats contractants désignés:
**AT BE CH DE ES FR GB GR IT LI LU NL**

(71) Demandeur: **LABORATOIRES STANDA**
**184 Rue du Maréchal-Galliéni**
**F-14000 Caen (FR)**

(72) Inventeur: **Legrand, Charles Gabriel**
**14 Avenue de Creully**
**F-14000 Caen (FR)**

**Roussel, Edmond Daniel**
**Rue Saint-Loup**
**Avenay F-14210 Evrecy (FR)**

(74) Mandataire: **Ayache, Monique et al**
**CABINET PLASSERAUD 84, rue d'Amsterdam**
**F-75009 Paris (FR)**

(54) **Additif alimentaire obtenu à partir de graines, pratiquement dépourvu de microorganismes parasites, sa fabrication et son utilisation.**

(57) L'invention a pour objet un additif alimentaire provenant de graines à usage alimentaire, germées et fermentées, riche en éléments biotiques tels qu'enzymes, hormones, oligo-éléments et vitamines, pratiquement dépourvu de microorganismes parasites et contenant une flore bactérienne dirigée, associée ou non à une flore fongique également dirigée.

La figure unique représente différentes variantes de fabrication de cet additif.

Application à l'alimentation des animaux, notamment des jeunes animaux, des mâles reproducteurs et des femelles gestantes.

EP 0 281 458 A2

# 0 281 458

**Description**

Additif alimentaire obtenu à partir de graines, pratiquement dépourvu de microorganismes parasites, sa fabrication et son utilisation.

L'invention concerne les additifs pour l'alimentation, notamment animale.

Elle a plus particulièrement pour objet un additif alimentaire riche en éléments biotiques résultant de la germination et de la fermentation de graines à usage alimentaire et pratiquement dépourvu de microorganismes parasites, un procédé pour sa fabrication et son utilisation.

On sait que les aliments actuellement utilisés, tant dans l'alimentation humaine qu'animale, mais tout particulièrement dans les élevages industriels, présentent des déficits en éléments biotiques tels que notamment enzymes, hormones, oligo-éléments et vitamines.

Ces déficits ont des conséquences fâcheuses sur le développement de l'enfant ou du jeune animal, et de façon générale sur la santé humaine ou animale.

Dans le cas plus particulier de l'alimentation animale, ces déficits conduisent à une mise à profit incomplète des aliments et, partant, à un mauvais rendement.

Pour remédier à ces déficits, on a déjà proposé différents additifs alimentaires et en particulier des additifs obtenus par germination, éventuellement suivie d'une fermentation, de différents types de graines.

Il est connu depuis longtemps dans de nombreux pays, et notamment en Asie, de préparer des aliments ou des additifs alimentaires en faisant germer des graines de végétaux par un quelconque procédé manuel ou mécanique plus ou moins automatique, continu ou discontinu, avec, éventuellement, en plus, une phase de fermentation par des microorganismes.

La consommation de tels aliments ou additifs alimentaires a toujours été considérée comme très utile, notamment au plan nutritif. On peut toutefois s'interroger sur les raisons qui font que cette pratique considérée comme si avantageuse n'a pas connu une application généralisée.

Il semble que cela est dû à une réelle inconstance des résultats obtenus, voire même dans certains cas à une absence de résultats positifs et plus encore, souvent, à des accidents résultant d'une toxicité liée à des incidents lors de la production et/ou de la conservation.

Selon l'état de la technique, en général, on utilise des graines (céréales, protéagineux, oléagineux par exemple) prises séparément, variété par variété, ou au contraire en mélanges, aptes à germer, que l'on fait germer en milieu humide et aéré.

La phase de germination, qui génère la vie active et le développement de la graine, correspond à la genèse d'éléments biotiques nombreux et jouant un rôle important aux différents niveaux, à savoir notamment des enzymes, hormones, oligo-éléments et vitamines.

Ces éléments sont accompagnés d'une flore de microorganismes plus ou moins spécifiques suivant les pays et les types de graines avec, bien entendu, la richesse biotique intra- et extra-cellulaire de ces mêmes microorganismes.

De façon générale, la germination, suivant le procédé utilisé et la finalité recherchée, peut durer de 2 à 10 jours.

Le produit ainsi obtenu étant un produit humide, il est éminemment évolutif sur les plans bactériologique et fongique et sa conservation est donc limitée.

Chaque lot de graines ayant sa propre flore sauvage de microorganismes, le produit obtenu présente une évolution relativement imprévisible et est de toute façon fragile. Pour tenter de remédier à ces inconvénients, une certaine pratique consiste à ensemencer les lots résultant de la germination avec des microorganismes qui provoquent un abaissement de pH, permettant ainsi de mieux maîtriser l'évolution de ces lots. Toutefois cette pratique ne permet pas d'éliminer les risques inhérents à la présence d'une flore sauvage non identifiée, notamment au niveau des mycotoxines.

Ainsi, une technologie actuellement utilisée pour la fabrication d'un additif pour l'alimentation des animaux, notamment des mâles reproducteurs, des femelles gestantes et des jeunes chez les bovins, ovins, porcins, caprins et volailles, est la suivante.

Dans un germoir, alimenté en eau et en air, on réalise la germination de graines de céréales (éventuellement brossées) et aptes à la germination. Ces graines apportent avec elles leur flore bactériologique et frongique sauvage, c'est-à-dire celle des champs, lieux et atmosphères où elles ont été produites ou stockées, si elles on été entreposées en silo.

Ces graines, correctement humidifiées et aérées germent dans des temps variables qui dépendent surtout de la température et se situent en principe entre 40 et 96 heures.

Lorsque la germination est jugée suffisante, on introduit dans le germoir un inoculum de ferments lactiques aptes à se développer sur végétaux et capables d'améliorer la conservation ultérieure par abaissement du pH de l'ensemble.

On procède ensuite à la vidange du germoir et à la mise en sacs plastiques scellés où la création d'un milieu anaérobie stoppe la germination.

Le produit obtenu est en fait une graine germée, fermentée par les bactéries lactiques, mais renfermant une flore bactériologique et fongique indéfinie, en raison de la présence initiale d'une flore sauvage.

Dans ces conditions, il n'est pas surprenant que la qualité bactériologique et fongique d'au moins certaines graines germées proposées pour l'alimentation humaine soit jugée insuffisante par la Direction de la

2

Consommation et de la Répression des Fraudes qui, notamment dans un article de H. Carré et coll. paru dans Bretagne agro-aliment. FRA (1986), 13(3) p. 11 à 15 et intitulé "Qualité bactériologique des denrées végétales. Exemple des germes de soja frais", dénonce dans ces aliments la présence de coliformes, coliformes fécaux et moisissures à des concentrations respectives atteignant fréquemment $10^7$ à $10^8$, $10^6$ à $10^7$ et $10^3$ à $10^4$ microorganismes par gramme de produit.

Compte tenu de l'observation de ces contaminations importantes, même dans des denrées destinées à l'alimentation humaine, il s'est avéré nécessaire de mettre au point un additif alimentaire du type susindiqué qui serait dépourvu de microorganismes parasites ainsi qu'un procédé permettant de maîtriser parfaitement la fabrication et la conservation d'un tel produit.

Selon l'invention, on a mis au point un produit du type sisindiqué et un procédé pour son obtention.

Pour la fabrication, on s'est efforcé de comprendre les phénomènes mis en oeuvre et il a ainsi été constaté que le choix qualitatif de la matière première est important, notamment son aptitude à la germination et sa propreté.

On ainsi établi que les graines germées obtenues selon l'art antérieur se conservent très mal, malgré la fermentation lactique qui s'y développe spontanément, par exemple dans un ensilage, ne supprimant pas les putréfactions et le développement de moisissures occasionnels, avec tous les dangers que cela représente.

On a également établi que l'ensemencement lactique pour renforcer la fermentation lactique et abaisser le pH, pratiqué selon l'art antérieur, supprime certaines causes de putréfaction, mais n'a aucune action sur les moisissures, les levures, les sulfito-réducteurs, qu'il serait donc nécessaire d'éliminer si l'on voulait garantir la qualité du produit fini.

Ainsi donc, selon l'un de ses aspects, l'invention a pour objet un additif alimentaire provenant de graines à usage alimentaire, germées et fermentées, riche en éléments biotiques tels qu'enzymes, hormones, oligo-éléments et vitamines, pratiquement dépourvu de microorganismes parasites et contenant une flore bactérienne dirigée, associée ou non à une flore fongique également dirigée.

Selon l'invention, on entend par microorganismes parasites des microorganismes susceptibles de nuire à l'aspect du produit fini, à sa conservation et/ou à ses qualités bactériologiques et fongiques, en raison notamment des toxines qu'ils pourraient produite.

L'additif selon l'invention peut être constitué tout simplement par des graines germées et fermentées entières. Il peut aussi être constitué par le jus de fermentation des graines, le broyat des graines germées et fermentées, le jus extrait des graines germées et fermentées, le rétentat de filtration du broyat, notamment. Ces différentes éléments peuvent éventuellement être présents en mélange.

Selon un mode préféré de réalisation, l'additif alimentaire selon l'invention est constitué par le jus de fermentation des graines, le broyat des graines germées et fermentées, le jus extrait de ces graines, le rétentat de filtration, seuls ou en mélange, dans lesquels les éléments biotiques indiqués plus haut sont enrobés d'une argile.

Les additifs de ce type peuvent se présenter sous différentes formes telles que : forme liquide ayant un extrait sec ou E.S. de 10 à 25 %, pâte ayant un E.S. de 25 à 50 %, pains ayant un E.S. de 50 à 80 %, poudres, granulés ou comprimés ayant un E.S. de 80 à 97 %.

L'invention a en outre pur objet un procédé pour la fabrication de cet additif.

Comme expliqué plus haut, on est arrivé, dans le cadre des recherches préliminaires qui ont conduit à la mise au point de la présente invention, à la conclusion selon laquelle, pour obtenir un additif alimentaire du type susindiqué de qualité nutritive constante et pratiquement dépourvu d'effets toxiques, il est nécessaire d'éliminer, au moins dans une large mesure, notamment les causes de putréfaction, les moisissures, les levures et les sulfito-réducteurs.

L'homme du métier, compte tenu de ses connaissances générales en la matière, devait être amené à effectuer une décontamination du produit fini. Or, il a été établi selon l'invention qu'une telle décontamination serait très complexe.

Partant de cette constatation, on a eu l'idée inattendue de décontaminer au départ les graines mises en oeuvre.

Différents essais préliminaires réalisés avec des gaz (par exemple l'oxyde d'éthylène) ou des agents oxydants (par exemple l'hypochlorite de sodium) ont montré que les conditions d'une telle décontamination devaient être choisies avec soin si l'on voulait obtenir ensuite un produit présentant les qualités nutritives et sanitaires recherchées.

On a en effet constaté qu'une décontamination mal maîtrisée peut être dangereuse car elle peut laisser la place libre à certains microorganismes pathogènes aptes à se développer rapidement dans ce milieu (Candida krusei, Torulopsis galbrata, en particulier).

Il convient donc de décontaminer parfaitement les graines, ce qui impose un "traitement de choc", maintenant cependant le pouvoir germinatif des graines, et de préparer ensuite l'additif alimentaire dans des conditions telles que toute recontamination soit évitée.

La demanderesse a ainsi mis au point une succession particulière et inattendue d'étapes de traitement de graines à usage alimentaire, lui permettant d'obtenir un additif alimentaire à la fois riche en éléments biotiques provenant de leur germination et de leur fermentation et pratiquement dépourvu de microorganismes parasites.

De façon générale, le procédé selon l'invention consiste à soumettre les graines choisies essentiellement aux traitements successifs suivants :

**0 281 458**

- décontamination des graines dans des conditions particulières ;
- ensemencement en microorganismes non parasites pour "occuper le terrain" et empêcher le développement d'un éventuel contaminant ;
- germination ; et
- fermentation en présence de microorganismes anaérobies facultatifs et/ou anaérobies, éventuellement après nouvel ensemencement.

Plus précisément, selon un autre de ses aspects, l'invention a pour objet un procédé de fabrication d'un additif alimentaire riche en éléments biotiques résultant de la germination et de la fermentation de graines à usage alimentaire et pratiquement dépourvu de microorganismes parasites, caractérisé en ce qu'il comprend essentiellement les étapes successives consistant à :

1) soumettre des graines aptes à germer à un traitement de décontamination capable d'agir au moins à la surface des graines, sans affecter leur pouvoir germinatif et sans les rendre impropres à la consommation ;

2) ensemencer les graines humides avec une suspension de bactéries et/ou levures non parasites, capables d'occuper pratiquement tout le milieu ;

3) soumettre les graines à germination en milieu aérobie humide, à une température et pendant une durée telles que 30 % au moins des graines soient germées ;

4) ensemencer éventuellement de nouveau les graines avec des ferments anaérobies facultatifs et/ou anaérobies non parasites, aptes à produire une acidification du milieu;

5) soumettre à fermentation les graines telles qu'obtenues à l'étape 3) ou éventuellement 4), et arrêter leur germination en créant des conditons anaérobies ; et

6) transformer éventuellement les graines fermentées, leurs extraits et/ou leur jus de fermentation en un produit fini.

Toute graine à usage alimentaire apte à germer peut être utilisée selon l'invention. Il peut s'agir d'espèces très variées telles que céréales, notamment orge ou blé, protéagineuses telles que soja, pois, lentilles; oléagineuses telles que colza, tournesol ou de mélanges de différents types de graines, suivant les produits biotiques recherchés et leurs proportions.

Dans la définition du procédé selon l'invention, par "graines" on entend donc aussi bien un ensemble de graines de la même espèce qu'un mélange de graines de deux ou plusieurs espèces différentes.

Avant d'être décontaminées, les graines sont de préférence brossées de la manière habituelle.

Le traitement de décontamination doit être aussi efficace que possible, donc traiter les graines de préférence "en profondeur" sans toutefois altérer leur aptitude à la germination ni les rendre impropres à la consommation.

Ainsi sont exclus les procédés classiques de stérilisation par la chaleur sèche ou humide qui affectent le pouvoir germinatif (la graine étant "tuée" à 54°C) et les procédés classiques de décontamination des semences, en particulier par les produits mercuriques et notamment le silicate de méthoxyéthylmercure qui rendent les graines impropres à la consommation.

La décontamination selon l'invention peut être réalisée par voie sèche ou par voie humide.

A titre indicatif, la décontamination par voie sèche peut être réalisée par un gaz désinfectant capable d'agir non seulement à la surface mais de préférence aussi à l'intérieur des téguments et du péricarpe des graines, ou par ionisation.

En tant que gaz de ce type on peut citer l'oxyde d'éthylène ou l'oxyde de propylène, utilisés à une température voisine de la température ambiante (20 à 45°C environ). On les applique notamment à raison de 100 à 1000 ppm que l'on fait agir pendant 1 à 7 jours, de préférence à raison de 200 ppm que l'on fait agir pendant 2 à 3 jours.

L'ionisation est appliquée de préférence à raison de 1 à 10 kGy.

A titre indicatif, la décontamination par voie humide peut être effectuée au moyen d'un oxydant compatible avec l'usage alimentaire, notamment l'hypochlorite de sodium à une concentration de 0,1 à 10, notamment de 1 à 6 degrés chlorométriques, la durée du traitement étant de préférence de 5 minutes à 1 heure, ou au moyen d'un autre désinfectant tel qu'une solution aqueuse d'acide formique et de formol.

Le traitement de décontamination des graines est réalisé de préférence dans la cuve de germination de façon à assurer en même temps la décontamination du matériel. Avantageusement, l'eau utilisée pendant toute la mise en oeuvre du procédé est décontaminée, notamment à l'hypochlorite de sodium (verdunisation) et/ou est acidifiée par un acide compatible avec l'usage alimentaire, notamment l'acide chlorhydrique, à une concentration de 35 %, à raison de 2‰ et l'air est filtré, par exemple sur filtre bactériologique dit absolu.

Les graines sont de préférence ensuite rincées et imbibées d'eau dans le cas d'une décontamination par voie sèche.

L'ensemencement par une suspension microbienne s'effectue avantageusement à raison de $10^4$ à $10^7$ germes par gramme de graines mises en oeuvre.

On utilise de préférence un mélange de levures, par exemple à raison de $10^6$ germes par gramme de graines et de ferments lactiques mésophiles et/ou thermophiles, par exemple à raison de $10^5$ à $10^6$ germes par gramme de graines.

Les levures produisent à partir du substrat hydrolysé (par la germination) une biomasse qui enrichit le produit fini et apporte des facteurs de croissance utiles au développement des bactéries lactiques. Pour accélérer le phénomène, on peut apporter en même temps que cet inoculum, un substrat facilement

4

assimilable tel que la mélasse à raison de 0,1 à 1 % en poids, par exemple.

Les grains humides décontaminées et ensemencées sont germées en milieu aérobie humide, pendant 36 à 96 heures suivant les températures.

De préférence, la germination est poursuivie jusqu'à ce qu'au moins 50 % des graines présentent des germes apparents.

Les ferments anaérobies facultatifs et/ou anaérobies non parasites éventuellement introduits à l'étape 4) sont utilisés de préférence à raison de $10^4$ à $10^7$ germes par gramme de graines. Il s'agit de préférence de ferments lactiques mésophiles et/ou thermophiles utilisés avantageusement à raison de $10^5$ à $10^6$ germes par gramme, notamment si les graines n'ont pas été ensemencées par des ferments lactiques à l'étape 2).

Il va de soi que les bactéries et levures non parasites qui peuvent être mises en oeuvre dans le cadre du procédé selon l'invention peuvent être des bactéries et levures non parasites qui existent à l'état naturel ou qui sont produites ou modifiées par génie génétique.

La germination des graines est arrêtée par la création de conditions anaérobies dans le germoir ou après vidange dans des sacs en plastique fermés, par exemple.

La demande en oxygène des cellules végétales permet d'appauvrir très rapidement en $O_2$ l'atmosphère de la cuve de germination lorsque toutes les ouvertures sont fermées et que la ventilation est arrêtée.

Si nécessaire, la fermentation est poursuivie soit en cuve de germination close, soit en sac à la température ambiante ou à la température optimum pour les bactéries inoculées (15 à 30°C pour les mésophiles et 30 à 45°C pour les thermophiles, par exemple) jusqu'à l'obtention d'un pH voisin de 4, soit de 4,5 à 3,8, de préférence de 4 à 3,8.

On obtient ainsi des graines germées, fermentées en présentation humide avec une flore dirigée, contenant par exemple $10^6$ à $10^7$ levures des souches inoculées par gramme et $10^8$ à $10^9$ bactéries lactiques des souches inoculées par gramme de produit fini.

Ces graines germées et fermentées sont utilisées comme additif alimentaire, notamment en alimentation animale, en particulier pour les mâles reproducteurs, les femelles gestantes, et les jeunes chez les bovins, ovins, porcins, caprins et volailles, à raison de 5 à 20 % de la ration, suivant les animaux, pour l'amélioration du tonus et des performances.

Comme il a été indiqué plus haut, l'additif selon l'invention peut être constitué par le jus de fermentation des graines, le broyat des graines germées et fermentées, le jus extrait de ce broyat, le rétentat de filtration de ce broyat, seuls ou en mélange.

Le "jus de fermentation" des graines est le jus récupéré de préférence à la fin de la phase de fermentation.

Le "broyat des graines germées et fermentées" est la préparation obtenue par broyage des graines germées et fermentées. Ce broyat contient l'intégralité des éléments biotiques des graines germées et fermentées.

Le "jus extrait des graines germées et fermentées" est le jus obtenu par broyage et/ou pressage et filtration sous forte pression des graines germées et fermentées, en vue de provoquer leur éclatement. Le jus ainsi extrait comporte les éléments biotiques obtenus par éclatement de la jeune plantule et par éclatement de l'amande hydrolysée.

Le "rétentat de filtration" comprend les enveloppes cellulosiques non encore hydrolysées ou drêches et des éléments biotiques.

Après filtration, pressage s'il a lieu, les jus peuvent être concentrés, notamment par centrifugation, ultra-filtration ou osmose inverse.

Avantageusement, les broyats, jus et rétentats de filtration sont enrobés d'une argile, dans une proportion pondérale sur extrait sec de 1:10 à 10:1 et le mélange obtenu est éventuellement transformé en produit ayant l'extrait sec désiré.

L'argile utilisée peut être choisie notamment parmi les kaolinites, les illites et les smectites, comme notamment la montmorillonite, compatibles avec l'usage alimentaire.

Comme procédé de séchage on peut utiliser par exemple le séchage particulaire (spray), le séchage sur rouleau ("Hatmaker"), l'extrusion-séchage, le séchage en lit fluidisé ou la lyophilisation.

Quel que soit son mode d'obtention, le produit fini selon l'invention en présentation liquide ou pâte, peut être utilisé par addition à la buvée des animaux ou par alimentation directe à la cuillère ou à la seringue pour assurer un bon état sanitaire et le bon équilibre de la flore du tractus digestif, notamment chez les jeunes animaux.

Par exemple, pour les veaux, la dose peut être de 10 cm³ matin et soir par animal pendant 2 jours après la naissance, puis 5 cm³ matin et soir pendant 4 jours et ensuite à chaque stress (départ de la ferme, sevrage etc.) de 10 cm³ matin et soir pendant 2 jours à une semaine. On peut procéder de la même façon pour les agneaux, mais avec des doses divisées par deux.

Le produit en poudre peut être utilisé soit comme matière première pour l'amélioration des aliments en poudre pour animaux, à raison de 1 à 2‰ en poids par exemple, soit directement pour la complémentation de la ration, notamment des jeunes animaux, des mâles reproducteurs et des femelles gestantes à raison de 0,1 à 1 % par exemple, et tout particulièrement par cures de 5 à 10 jours pour l'amélioration du tonus et de l'état sanitaire.

Les rétentats de filtration en granulés ou en pain et les broyats en granulés sont utilisés comme la poudre mais à raison de 1 à 5 % en poids, notamment.

Les exemples suivants, non limitatifs, sont destinés à mieux expliquer l'invention.

**0 281 458**

EXEMPLE 1 : décontamination des graines par l'oxyde d'éthylène.

Les graines utilisées sont un mélange composé de :
- 85 % d'orge,
- 10 % de blé, et
- 5 % de pois fourragers.

La contamination initiale de ce mélange de graines est de l'ordre de 5 à 10 $\times$ $10^5$ germes aérobies par gramme et de $10^5$ moisissures par gramme.

Le traitement à 20°C à raison de 200 ppm d'oxyde d'éthylène (20 kg de mélange gazeux oxyde d'éthylène/dioxyde de carbone à 10 % d'oxyde d'éthylène commercialisé sous la dénomination Stéroxal 10 par la société l'Air Liquide pour 10 tonnes de graines) pendant 63 heures permet de réduire la population aérobie de 99 à 99,9 % et la flore fongique de plus de 99 %.

Le traitement à raison de 600 ppm. dans les mêmes conditions, conduit à une quasi stérilisation, comme le montre le tableau qui suit.

6

| Essai n° | Durée du traitement heures | Dose d'oxyde d'éthylène ppm | Flore totale * germes/g | % de réduction | Flore fongique ** germes/g | % de réduction |
|---|---|---|---|---|---|---|
| 1 | 15 | 100 | $41.10^3$ | 95 | $15.10^3$ | 85,8 |
| 2 | 15 | 190 | $46.10^3$ | 94,4 | $27.10^3$ | 74,0 |
| 3 | 15 | 330 | $34.10^3$ | 95,8 | $9.10^3$ | 91,5 |
| 4 | 15 | 540 | $32.10^3$ | 96 | $48.10^2$ | 95,5 |
| 5 | 23 | 120 | $62.10^3$ | 92 | $93.10^2$ | 91,2 |
| 6 | 23 | 205 | $41.10^3$ | 95 | $103.10^2$ | 90,3 |
| 7 | 23 | 342 | $109.10^2$ | 98,6 | $148.10^2$ | 86,0 |
| 8 | 23 | 582 | $118.10^2$ | 98,5 | $35.10^2$ | 96,7 |
| 9 | 39 | 120 | $192.10^2$ | 97,6 | $85.10^2$ | 91,98 |
| 10 | 39 | 180 | $86.10^2$ | 98,95 | $72.10^1$ | 99,32 |
| 11 | 39 | 331 | $125.10^2$ | 98,47 | $8.10^1$ | 99,92 |
| 12 | 39 | 574 | $53.10^2$ | 99,35 | $3.10^1$ | 99,97 |
| 13 | 63 | 117 | $60.10^2$ | 99,26 | $33.10^1$ | 99,68 |
| 14 | 63 | 200 | $15.10^2$ | 99,81 | $44.10^1$ | 99,59 |
| 15 | 63 | 367 | $16.10^2$ | 99,80 | < 10 | 100 |
| 16 | 63 | 615 | < 10 | 100 | < 10 | 100 |
| Témoins | 0 | 0 | $82.10^4$ | - | $106.10^3$ | - |

\* mesurée sur milieu au gélisat : 72 heures à 30°C.

\*\* mesurée sur milieu OGA - terramycine : 5 jours à 25°C.

NOTE :
- Le milieu au gélisat est constitué de Biogelytone Biomérieux, référence 53281 + agar.

7

- Le milieu OGA (M52) est décrit dans l'ouvrage de référence intitulé : "Qualité Bactériologique du Lait et des Produits Laitiers" de D. Petransxienne et L. Lapied, édité par Lavoisier - Technique et Documentation, Paris.

L'effet du traitement à l'oxyde d'éthylène sur la germination semble, selon les essais réalisés, variable en fonction de l'humidité des graines lors du traitement. L'effet de l'humidité est négligeable pour des graines dont l'humidité n'excède pas 14 %. Dans ces conditions, un traitement à 200 ppm pendant 48 heures réduit la germination de moins de 10 %. La dose a peu d'effet sur la germination. En revanche, le temps accroît cet effet. On préfère donc un traitement à forte concentration, pendant un temps plus court.

L'oxyde d'éthylène (Stéroxal 10) est injecté, après passage dans un réchauffeur (40°C), de préférence dans la cuve de germination ou dans une cuve annexe, préalablement chargée de graines à décontaminer, fermée hermétiquement.

Pour assurer un bon mélange du gaz décontaminant, dont la densité est de 1,5, il convient d'appliquer une agitation, par exemple par mise en rotation de la cuve à raison d'une rotation/heure, pendant quelques heures.

En fin de traitement, l'oxyde d'éthylène est chassé par ventilation forcée avec de l'air filtré pendant au moins une heure, puis par un lavage répété des graines à l'eau décontaminée et éventuellement acidifiée. L'oxyde d'éthylène résiduel a une concentration inférieure à 10 ppm dans le produit fini.

EXEMPLE 2 : Décontamination des graines à l'hypochlorite de sodium.

L'utilisation de l'hypochlorite de sodium par voie humide à raison de 0,2° chlorométrique permet en 15 minutes de réduire la population aérobie de 96 %.

Pour obtenir la même coefficient de réduction sur la flore fongique, il faut une concentration en hypochlorite de l'ordre de 0,5 à 1° chlorométrique.

Par ailleurs, les essais ont montré que l'hypochlorite n'agit pas en profondeur contrairement aux gaz, et le facteur temps n'intervient pas car les oxydants actifs se fixent rapidement sur la matière organique.

Ce procédé est donc utilisé essentiellement pour des graines peu contaminées et surtout indemnes de contamination en profondeur, c'est-à-dire à l'intérieur du péricarpe.

EXEMPLE 3 : Ensemencement en microorganismes après décontamination et trempage des graines.

Pour 10 tonnes de graines :
- on ajoute 3200 litres d'eau froide décontaminée éventuellement acidifiée, lorsque la décontamination des graines a été effectuée par voie sèche,
- on agite pendant 5 minutes,
- on vidange,
- on répète l'opération,
- on ajoute 800 litres d'eau décontaminée éventuellement acidifiée, à 30°C et la quantité d'inoculum nécessaire à l'occupation du terrain, par exemple 500 g, ainsi qu'éventuellement 20 kg de mélasse, enfin
- on ajoute 800 litres d'eau décontaminée, à 30°C, en douche toutes les 3 heures, pendant 13 heures.

Exemple d'inoculum pour 10 tonnes de graines sèches décontaminées.

500 g de poudre contenant :

Saccharomyces cerevisiae     $2.10^{10}$ g/g\*
Streptococcus faecium     $2.10^9$ g/g
Lactobacillus plantarum     $2.10^9$ g/g
Lactobacillus helveticus     $2.10^8$ g/g
Streptococcus lactis     $2.10^8$ g/g
Lactobacillus fermentum     $2.10^8$ g/g
Lactobacillus casei     $2.10^8$ g/g
\* g/g = germes par gramme

EXEMPLE 4 : Germination

Après les 12 heures de trempage, on aère la cuve au maximum et ajoute 800 litres d'eau décontaminée éventuellement acidifiée, à 30°C, toutes les 3 heures, pendant 60 heures, avec agitation toutes les 3 heures, avant chaque douche.

L'aération maximale est assurée en ouvrant toutes les trappes du germoir et en utilisant une ventilation d'aire décontaminé à 25/30°C, à raison de 1200 m³/heure.

EXEMPLE 5 : Fermentation et conditionnement du produit fini.

Lorsque 70 % des graines présentent des germes, la germination est stoppée pour éviter que le développement des plantules n'appauvrisse les ressources énergétiques développées par le processus de germination.

A ce stade, on ajoute un inoculum de ferments anaérobies facultatifs et aérobies, par exemple à raison de 500 g de poudre pur 10 tonnes de graines sèches.

Après arrêt de la ventilation, et fermeture des trappes, l'anaérobiose s'installe rapidement, assurant l'arrêt de la germination par asphyxie.

Les ferments lactiques anaérobies facultatifs pousuivent leur action, assurant ainsi l'abaissement du pH jusqu'à des valeurs voisines de 4,5 en 12 heures de fermentation, à 30°C.

Les graines germées fermentées sont ensuite conditionnées en sacs plastiques de 25 kg fermés par ligature ou soudure.

Lorsque le produit est stocké à la température ambiante, le pH atteint rapidement la valeur minimum de 4 à 3,8.

Exemple d'inoculum pour l'ensemencement des graines germées :
 Pour 10 tonnes de grains secs de départ, on utilise 500 g de poudre contenant :

Streptococcus faecium    $2.10^9$ g/g*
Lactobacillus plantarum    $2.10^9$ g/g
Lactobacillus helveticus    $2.10^8$ g/g
Streptococcus lactis    $2.10^8$ g/g
Lactobacillus fermentum    $2.10^8$ g/g
Propioni bacterium    $8.10^8$ g/g
Lactobacillus casei    $2.10^8$ g/g
* g/g = germes par gramme

Analyse du produit fini obtenu par mise en oeuvre des exemples 1 ou 2 et 3 à 5, en utilisant les inoculums décrits ci-dessus.
Extrait sec    52 %
pH    4,0
rH    10
Lactobacillus sur MRS (M43)[1]    $1,2 \times 10^9$/g
Streptocoques sur M17[2]    $4 \times 10^8$/g
Entérocoques sur Roth Lisky (M22,M23)[3]    $4 \times 10^8$/g
Flore lactique sur Elliker[4]    $1,5 \times 10^9$/g
Flore non lactique, milieu au gélisat    $2 \times 10^5$/g
Coliformes fécaux, bouillon lactosé au vert brillant + eau peptonée (M64+M3)[5]    < 100/g
Flore fongique sur OGA (M52)[6]
- levures    $5 \times 10^7$/g
- Oidium    < 100/g
- Moisissures    < 100/g
Flore butyrique sur milieu à la résazurine[7]    < 100/g

1,2,3,5 et 6 : décrits dans l'ouvrage "Qualité Bactériologique du Lait et des Produits Laitiers" cité plus haut.
4 : produit Difco, réf. 0974011 + agar
7 : circulaire DSV 8092 du 17 juin 1986, annexe 4.

EXEMPLE 6 : Enrobage des produits biotiques par de l'argile.
 Les graines germées obtenues à l'exemple 5 sont vidangées dans un broyeur qui éclate les graines et les envoie dans une cuve en acier inoxydable fermée, à double paroi, pour fermentation. Le broyat est alors inoculé avec 500 g de poudre contenant :

Streptococcus faecium    $2.10^9$ g/g*
Lactobacillus plantarum    $2.10^9$ g/g
Lactobacillus helveticus    $2.10^8$ g/g
Streptococcus lactis    $2.10^8$ g/g
Lactobacillus fermentum    $2.10^8$ g/g
Lactobacillus casei    $2.10^8$ g/g
Propioni bacterium    $8.10^8$ g/g
* g/g = germes par gramme

La fermentation à 30°C est ensuite pousuivie jusqu'à l'obtention d'un pH voisin de 4.
Le broyat ainsi fermenté est pour partie enrobé d'argile montmorillonite commercialisée ous la dénomination CLARSOL $KC_2$ par la société CECA à raison de 20 %, donnant une pâte épaisse qui est extrudée puis séchée en tambour rotatif à basse température (50°C au maximum) avec une forte ventilation d'air sec. Le produit obtenu, avec une humidité inférieur à 15 %, est une granulé parfaitement stable.
Le reste du broyat fermenté, (additionné de 5 à 30 % d'eau), est pressé et filtré (filtre presse type Klein). Le rétentat de filtration est traité comme le broyat avec 20 % d'argile et transformé en granulés (extrait sec 85 %) ou en pains (extrait sec > 50 %).
Les jus sont enrobés d'argile $KC_2$ que l'on ajoute en quantité égale à l'extrait sec des jus (10 à 20 %).
Les jus enrobés sont pour une part conditonnés tels quels en bidons ou seaux en présentation liquide (E.S. 10 à 25 %) ou pâte (E.S. 25 à 50 %).

L'autre partie des jus enrobés subit un séchage particulier en tour spray avec une température de sortie de l'aire aussi basse que possible, de l'ordre de 68-70°C. On obtient une poudre blanche présentant les caractéristiques suivantes :

- humidité 4 %
- pH 4,5
- particules brûlées : absence.

La poudre obtenue peut être utilisée telle quelle ou transformée après une simple addition de lubrifiant usuel, en comprimés, l'argile KC₂ consituant un excellent additif pour compression.

Résultats de l'exemple 6 :

1. Analyse du broyat transformé en granulés

Extrait sec    90 %
pH    4,4
Lactobacillus sur MRS    $3.10^7$ g/g*
Flore lactique sur Elliker    $5.10^7$ g/g
Levures sur OGA    $10^3$ g/g
Moisissures sur OGA    $< 10^2$ g/g
Clostridium sulfito-réducteur    $< 10^2$ g/g
Flore butyrique sur milieu à la résazurine    $< 10^2$ g/g
Coliformes fécaux    $< 10^2$ g/g
* g/g : germes/gramme

2. Analyse de la poudre obtenue

Humidité    $< 4$ %
pH    4,5
Flore banale    $4.10^4$ g/g
Lactobacilles    $5.10^6$ g/g
Levures    $5.10^4$ g/g
Clostridium sulfito-réducteur    $< 10^2$ g/g
Flore butyrique    $< 10^2$ g/g
Bacillus    $< 10^4$ g/g
Moisissures    $< 10^2$ g/g

3. Analyse des pâtes obtenues.

Extrait sec    37 %
pH    3,8
Flore banale    $10^5$ g/g
Lactobacilles    $5.10^9$ g/g
Flore lactique    $8.10^9$ g/g
Levures    $1,1.10^6$ g/g
Clostridium sulfito-réducteur    $< 10^2$ g/g
Flore butyrique    $< 10^2$ g/g
Bacillus    $< 10^4$ g/g
Moisissures    $< 10^2$ g/g

EXEMPLE 7 :

Dans une cuve rotative fermée (vannes et trappes d'aération) :

1) on verse 5000 litres d'eau à 4,2° cl (soit 450 litres d'extrait d'hypochlorite de sodium à 47/50° cl + 4550 litres d'eau) ;

2) on ajoute 6 tonnes de graines au préalable brossées et dépoussiérées (80 % d'orge, 15 % de blé, 5 % de pois fourragers) ;

3) on fait 2 ou 3 rotations de la cuve de façon à bien répartir les graines ;

4) on arrête la cuve de telle sorte que les graines soient immergées pendant 1/2 heure ;

5) on vidange l'eau contenant de l'hypochlorite de sodium ;

6) on rince 3 fois, avec 800 litres d'eau décontaminée (par filtration) à chaque fois, et en faisant 3 ou 4 rotations de la cuve avant chaque vidange de l'eau de rinçage ;

7) on referme les vannes ;

8) on introduit l'inoculum A (bactéries lactiques et levures de l'exemple 3) dans la cuve à eau contenant 800 litres d'eau filtrée à 30°C ;

9) on pulvérise 800 litres d'eau filtrée à 30°C toutes les 3 heures et fait une rotation de la cuve toutes les heures, pendant 12 heures ;

10) on vidange l'eau, laisse une vanne et les trappes latérales ouvertes et met la ventilation en marche (air filtré à 30°C; filtre bactériologique absolu) ; la cuve est alors protégée par une surpression d'air filtré ;

11) on pulvérise 800 litres d'eau à 30°C toutes les 3 heures et fait une rotation de la cuve toutes les 2H30, pendant 84 heures ; germination de 99 % pour les pois, 85 % pour l'orge et 70 % pour le blé;

    12) on vidange l'eau puis on ferme les trappes et vannes ; on arrête la ventilation ;

    13) on introduit l'inoculum B (bactéries lactiques + Proprioni bacterium de l'exemple 5) dans une cuve de 800 litres d'eau filtrée à 30°C ;

    14) on pulvérise l'eau avec l'inoclum B sur les graines ;

    15) on coupe l'alimentation en eau ;

    16) on fait une rotation de la cuve toutes les 2 heures, pendant 12 heures;

    17) on arrête et laisse au repos ;

    18) on met une partie des graines en sacs plastiques étanches de 25 kg ;

    19) on vidange le reste dans un broyeur ;

    20) on ajoute de l'argile KC2 (montmorillonite) à raison de 10 % de l'extrait sec (52,4 %), soit environ 5 % du poids total ;

    21) on envoie le mélange dans une cuve étanche et laisse macérer pendant 24 heures à 30°C ;

    22) on répartit le broyat sur des plateaux (5 cm d'épaisseur maximum) ;

    23) on introduit les plateaux dans une étuve à vide à 45°C, pression environ 9330 Pa (70 mmHg), pendant 30 heures ;

    24) on sort les plateaux et broie les gâteaux obtenus, puis on met la poudre obtenue en sacs étanches.

| Analyse des graines brossées, dépoussiérées | | Analyse des graines décontaminées (point 7) |
|---|---|---|
| Flore totale/g | $35 \times 10^6$ | < 100 |
| Levures/g | $12 \times 10^4$ | < 100 |
| Moisissures/g | $5 \times 10^4$ | < 100 |
| Clostridium/g | 40 | < 10 |

Analyse du produit fini humide (point 18)
Streptocoques lactiques/ml    $23 \times 10^7$
Lactobacilles/ml    $62 \times 10^7$
Moisissures/ml    < 100
Levures/ml    $70 \times 10^3$
Clostridium, groupe butyrique/ml    < 10
Anaérobies sulfito-réd. 46°C/ml    < 1
Spores d'anaérobies sulfito-réd. 46°C/ml    < 1
Coliformes fécaux/ml    < 1
Spores d'Aspergillus/ml    absence
Salmonella dans 25 ml    négatif
Charbon dans 25 ml (Bacillus anthracis)    négatif
pH    4,3
Matières sèche    52.4 %
Matières minérales    1,2 %
Matière ajoutée totale (N × 6,25)    6,6 %
Matières grasses    0,9 %
Cellulose brute    2,2 %
Cendres insolubles dans HCl    0,19 %
U.F.L.[b]    0,60
U.F.V.[c]    0,60
Coefficient de solubilité de l'azote    0,31
PDIN[d]    45,9
PDIE[e]    57,7
MAD[f]    51,1

Analyse du produit sec (point 24)
pH    4,5
Matière sèche    94,3 %
Streptocoques lactiques/g    $17 \times 10^6$
Lactobacilles/g    $10 \times 10^6$
Moisissures/g    < 100

Levures/g    $5 \times 10^3$
Clostridium, groupe butyrique/g    < 10
Anaérobies-sulfito-réd. 46°C/g    < 10
Spores d'anaérobies sulfito-réd. 46°C/g    < 10
Coliformes fécaux/g    < 10
Spores d'Aspergillus/g    absence
Salmonella dans 25 g    négatif
Charbon dans 25 g (Bacillus anthracis)    négatif

        a : 46°C = température de culture des microorganismes
        b : unité fourragère lait
        c : unité fourragère viande
        d : protéines digestibles dans l'intestion (facteur limitant : azote)
        e : protéines digestibles dans l'intestion (facteur limitant : énergie)
        f : matière azotée digestible

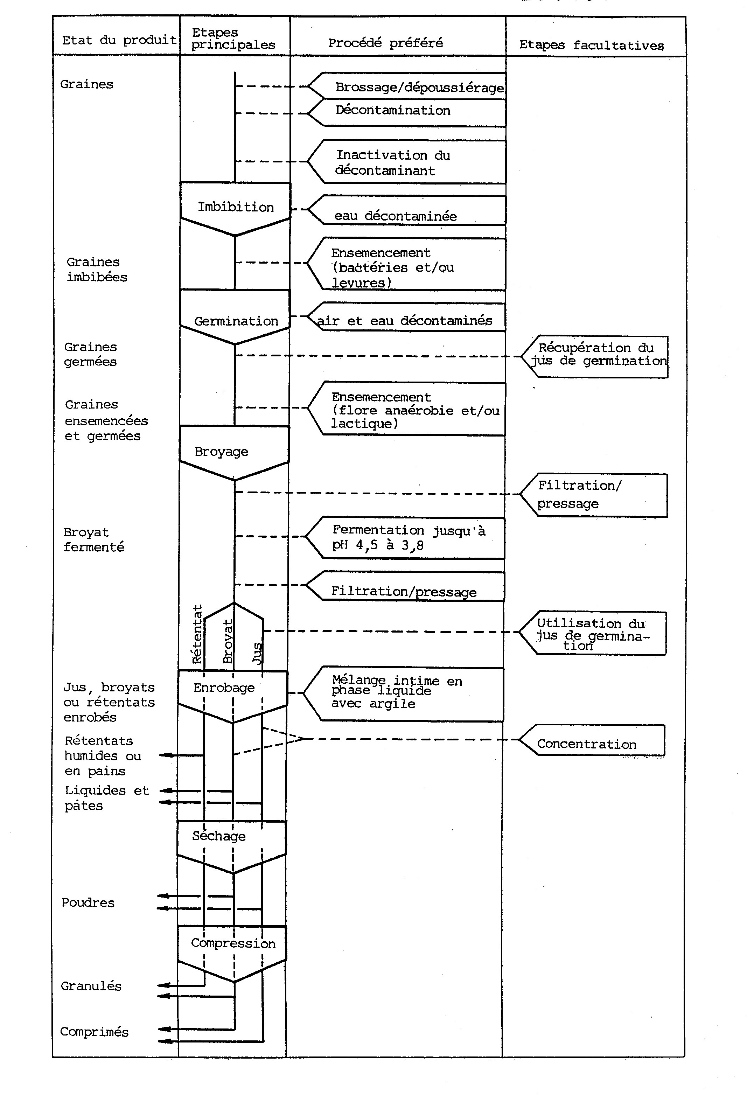

Différentes variantes du procédé selon l'invention, avec leurs étapes essentielles, sont mises en évidence sur le schéma de fabrication représenté à la figure unique annexée.

## Revendications

1. Additif alimentaire provenant de graines à usage alimentaire, germées et fermentées, riche en éléments biotiques tels qu'enzymes, hormones, oligoéléments et vitamines, pratiquement dépourvu de microorganismes parasites et contenant une flore bactérienne dirigée, associée ou non à une flore fongique également dirigée.

2. Additif selon la revendication 1, caractérisé en ce qu'il est constitué par des graines germées et fermentées entières, par le jus de fermentation des graines, le broyat des graines germées et fermentées, le jus extrait des graines germées et fermentées ou le rétentat de filtration du broyat, seuls ou en mélange

3. Additif selon la revendication 1, caractérisé en ce qu'il est constitué par le jus de fermentation des graines, le broyat des graines germées et fermentées, le jus extrait de ces graines, le rétentat de filtration, seuls ou en mélange, dans lesquels les éléments biotiques sont enrobés d'une argile.

4. Procédé de fabrication d'un additif alimentaire riche en éléments biotiques résultant de la germination et de la fermentation de graines à usage alimentaire et pratiquement dépourvu de microorganismes parasites, caractérisé en ce qu'il comprend essentiellement les étapes successives consistant à:

    1) soumettre des graines aptes à germer à un traitement de décontamination capable d'agir au moins à la surface des graines, sans affecter leur pouvoir germinatif et sans les rendre impropres à la consommation ;

    2) ensemencer les graines humides avec une suspension de bactéries et/ou levures non parasites, capables d'occuper pratiquement tout le milieu ;

    3) soumettre les graines à germination en milieu aérobie humide, à une température et pendant une durée telles que 30 % au moins des graines soient germées ;

    4) ensemencer éventuellement de nouveau les graines avec des ferments anaérobies facultatifs et/ou anaérobies non parasites, aptes à produire une acidification du milieu;

    5) soumettre à fermentation les graines telles qu'obtenues à l'étape 3) ou éventuellement 4), et arrêter leur germination en créant des conditions anaérobies ; et

    6) transformer éventuellement les graines fermentées, ou leurs extraits et/ou leur jus de fermentation en un produit fini.

5. Procédé selon la revendication 4, caractérisé en ce que la décontamination est effectuée par voie sèche, de préférence au moyen d'oxyde d'éthylène ou d'oxyde de propylène, à raison de 100 à 1000 ppm que l'on fait agir pendant 1 à 7 jours, notamment à raison de 200 ppm que l'on fait agir pendant 2 à 3 jours.

6. Procédé selon la revendication 4, caractérisé en ce que la décontamination est effectuée par voie humide, de préférence au moyen d'hypochlorite de sodium à une concentration de 0,1 à 10, notamment de 1 à 6 degrés chlorométriques, de préférence pendant 5 minutes à 1 heure.

7. Procédé selon l'une des revendications 4 à 6, caractérisé en ce que à l'étape 2, l'ensemencement s'effectue à raison de $10^4$ à $10^7$ germes par gramme de graines mises en oeuvre, de préférence à raison d'un mélange de $10^6$ levures par gramme et de $10^5$ à $10^6$ ferments lactiques mésophiles et/ou thermophiles par gramme.

8. Procédé selon l'une des revendications 4 à 7, caractérisé en ce que la germination est poursuivie jusqu'à ce qu'au moins 50 % des graines présentent des germes apparents.

9. Procédé selon l'une des revendications 4 à 8, caractérisé en ce que les ferment anaérobies facultatifs et/ou anaérobies sont introduits à l'étape 4) à raison de $10^4$ à $10^7$ germes par gramme.

10. Procédé selon l'une des revendications 4 à 9, caractérisé en ce que la fermentation est poursuivie jusqu'à un pH de 4,5 à 3,8, de préférence de 4 à 3,8.

11. Procédé selon l'une des revendications 4 à 9, selon lequel, pour la fabrication de l'additif selon la revendication 3, les broyats, jus et/ou rétentats de filtration sont enrobés d'une argile compatible avec l'usage alimentaire, dans une proportion pondérale sur extrait sec de 1:10 à 10:1 et le mélange obtenu est éventuellement transformé en produit ayant l'extrait sec désiré.

12. Utilisation de l'additif alimentaire selon l'une des revendications 1 à 3 dans l'alimentation des animaux, notamment des jeunes animaux, des mâles reproducteurs et des femelles gestantes.

0281458

| Etat du produit | Etapes principales | Procédé préféré | Etapes facultatives |
|---|---|---|---|

Graines → Brossage/dépoussiérage

Décontamination

Inactivation du décontaminant

Imbibition — eau décontaminée

Graines imbibées — Ensemencement (bactéries et/ou levures)

Germination — air et eau décontaminés

Graines germées — Récupération du jus de germination

Graines ensemencées et germées — Ensemencement (flore anaérobie et/ou lactique)

Broyage — Filtration/ pressage

Broyat fermenté — Fermentation jusqu'à pH 4,5 à 3,8

Filtration/pressage

Utilisation du jus de germination

Rétentat / Broyat / Jus

Jus, broyats ou rétentats enrobés — Enrobage — Mélange intime en phase liquide avec argile

Rétentats humides ou en pains — Concentration

Liquides et pâtes

Séchage

Poudres

Compression

Granulés

Comprimés